(19) Europäisches Patentamt
European Patent Office
Office européen des brevets

(11) EP 2 800 295 B1

(12) **EUROPEAN PATENT SPECIFICATION**

(45) Date of publication and mention
of the grant of the patent:
**08.03.2017 Bulletin 2017/10**

(51) Int Cl.:
*H04L 1/18* (2006.01)   *H04L 12/841* (2013.01)
*H04L 12/875* (2013.01)   *H04L 12/801* (2013.01)

(21) Application number: **14166789.9**

(22) Date of filing: **01.05.2014**

(54) **Device and method for scheduling packet transmission**

Vorrichtung und Verfahren zur Planung von Paketübertragung

Dispositif et procédé permettant de programmer une transmission de paquets

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **01.05.2013 KR 20130049084**

(43) Date of publication of application:
**05.11.2014 Bulletin 2014/45**

(73) Proprietor: **Industry-Academic Cooperation
Foundation
Yonsei University
Seoul 120-749 (KR)**

(72) Inventors:
• **Chung, Jong-Moon**
  **Seoul 140-727 (KR)**
• **Jo, Sung-Woong**
  **Seoul 120-110 (KR)**
• **Ahn, Myong Hwan**
  **Gyeonggi-do 440-300 (KR)**

(74) Representative: **Frei Patent Attorneys
Frei Patentanwaltsbüro AG
Postfach 1771
8032 Zürich (CH)**

(56) References cited:
• **LI J ET AL: "Adaptive per hop differentiation for
end-to-end delay assurance in multihop wireless
networks", AD HOC NETWORKS, ELSEVIER,
AMSTERDAM, NL, vol. 7, no. 6, 1 August 2009
(2009-08-01), pages 1169-1182, XP026038016,
ISSN: 1570-8705, DOI:
10.1016/J.ADHOC.2008.10.005 [retrieved on
2008-11-21]**
• **SHIGEYUKI OSADA ET AL: "Throughput
Optimization in TCP with a Performance
Enhancing Proxy", COMMUNICATION
TECHNOLOGY,. 2006. ICCT '06. INTERNATIONAL
CONFEREN CE ON, IEEE, PI, 1 November 2006
(2006-11-01), pages 1-6, XP031071898, ISBN:
978-1-4244-0800-9**
• **ADITYA DUA ET AL: "Channel, deadline, and
distortion (C D 2 ) aware scheduling for video
streams over wireless", IEEE TRANSACTIONS
ON WIRELESS COMMUNICATIONS, IEEE
SERVICE CENTER, PISCATAWAY, NJ, US, vol. 9,
no. 3, 1 March 2010 (2010-03-01), pages
1001-1011, XP011290374, ISSN: 1536-1276, DOI:
10.1109/TWC.2010.03.070120**
• **LIEBEHERR J ET AL: "EXACT ADMISSION
CONTROL FOR NETWORKS WITH A BOUNDED
DELAY SERVICE", IEEE / ACM TRANSACTIONS
ON NETWORKING, IEEE / ACM, NEW YORK, NY,
US, vol. 4, no. 6, 1 December 1996 (1996-12-01),
pages 885-901, XP000636037, ISSN: 1063-6692,
DOI: 10.1109/90.556345**

Description

BACKGROUND

*1. Technical Field*

The present invention relates to a device and method for scheduling packet transmission.

*2. Description of the Related Art*

As the amount of multimedia traffic increases for real-time services involving digital audio and digital video applications, various techniques are being developed to guarantee the QoS of each packet. A scheduling algorithm can be regarded as a representative example of a technique for ensuring packet QoS, and various scheduling algorithms are being developed in the field of wired networks. Existing scheduling algorithms in wired networks include EDF (Earliest Deadline First), CEDF (Coordinated EDF), G-EDF (Global-EDF), etc. EDF scheduling is an algorithm for determining transmission order by assigning higher priority to packets that have smaller delay bounds, and CEDF scheduling and G-EDF scheduling are algorithms for determining transmission order by assigning higher priority to packets having smaller delay bounds while incorporating coordination between nodes along the packet transmission path and were designed to guarantee QoS in packets having multi-hop paths. However, the algorithms described above were designed in consideration of wired networks and may not be efficient when applied directly to wireless networks.

A wireless network has unique properties compared to the wired network and requires a scheduler design that considers these properties. Some of the properties of the wireless network are as follows. In a wireless network, the channel capacity may vary according to the position of the user and according to time. Also, changes in channel status may cause errors during packet transmission, and when an error occurs for a packet, a retransmission of the packet is needed. As an existing scheduling algorithm for a wireless network, an algorithm has been proposed for supporting constant bitrate (CBR) traffic for a single-hop wireless network that uses a Markov decision process (MDP). Expanding on this method, Channel-Aware EDD (CA-EDD) was proposed as a scheduling algorithm that considers both delay bounds and channel status and uses dynamic programming (DP). However, these algorithms were designed for a downlink wireless network and do not consider packet transmission having multi-hop paths.

Regarding packet transmission scheduling of multi hop network, "Adaptive per hop differentiation for end to end delay assuarance in multihop wireless networks", AD HOC NETWORKS, ELSEVIER, AMSTERDAM, NL, vol. 7, no. 7, 1 August 2009 (2009-08-01) discloses packet scheduling based on "delay so far" information and "hops so far" information.

Regarding the availability of information on the number of nodes, "Packet Prioritization in Multihop Latency Aware Scheduling for Delay Constrained Communication", LIANG Ben and DONG Min, IEEE Journal on selected areas in communications, 2nd quarter 2007, discloses that the hop count information is recorded in most of the routing protocols proposed for ad hoc and mesh networks.

SUMMARY

An aspect of the invention proposes a device and method for scheduling packet transmission that can transmit packets efficiently in a multi-hop network.

One aspect of the invention provides a device for scheduling packet transmission that includes: an interface unit configured to transmit and receive a packet; a controller configured to calculate a local time and an ARQ time from a packet to be transmitted, where the local time is determined in proportion to a packet delay bound, and the ARQ time is determined based on the local time and the packet delay bound; a queue in which the packet to be transmitted is inputted; and a scheduler configured to determine a transmission order of packets inputted in the queue based on at least one of the local time and the ARQ time.

The queue may include a retransmission packet queue, in which a packet that is to be retransmitted is inputted, and an initial transmission packet queue, in which a packet that is to be transmitted initially is inputted.

The controller may use the local time first and then use the ARQ time when calculating the local time and the ARQ time.

When the ARQ time for a particular packet becomes 0 or lower, then the packet may be dropped.

In a multi-hop network, the local time may be set for each node, and the ARQ time may be set to a fixed value regardless of node.

If not all of the local time is used for a packet at a particular node transmitting the packet in the multi-hop network, the remaining local time may be added to the ARQ time to modify the ARQ time.

The controller may determine whether or not the packet to be transmitted is a retransmitted packet and may input the packet to the retransmission packet queue if the packet is a retransmitted packet and input the packet to the initial transmission packet queue if the packet is not a retransmitted packet.

The scheduler may assign a higher priority level to packets standing by in the retransmission packet queue than to packets standing by in the initial transmission packet queue.

The scheduler may determine priority levels for packets standing by in the initial transmission packet queue by using the local times.

The scheduler may determine priority levels for packets standing by in the retransmission packet queue by using the ARQ times.

If a particular packet from among the packets standing by in the initial transmission packet queue uses up all of its local time, then the controller may input the packet in the retransmission packet queue.

When a packet is received from a new flow, the controller may determine whether or not to accept the packet from the new flow.

The controller may determine whether or not to receive the packet from the new flow by considering the probability of a delay bound being violated and the processing capacity that would be required if the new packet is received.

Another aspect of the invention provides a method for scheduling packet transmission that includes: (a) inputting a packet to be transferred in a queue; (b) calculating a local time and an ARQ time from the packet to be transmitted, the local time determined in proportion to a packet delay bound, the ARQ time determined based on the local time and the packet delay bound; and (c) determining a priority level of the packet to be transmitted based on at least one of the local time and the ARQ time.

A method and device for scheduling packet transmission according to certain embodiments of the invention provide the advantage of efficient packet transmission in a multi-hop wireless network.

Additional aspects and advantages of the present invention will be set forth in part in the description which follows, and in part will be obvious from the description, or may be learned by practice of the invention.

## BRIEF DESCRIPTION OF THE DRAWINGS

FIG. 1 illustrates an example of a communication system to which a method for scheduling packet transmission based on an embodiment of the invention may be applied.

FIG. 2 illustrates a header structure for a transmitted packet according to an embodiment of the invention.

FIG. 3 illustrates changes in local time and ARQ time when a packet is transmitted according to an embodiment of the invention.

FIG. 4 is a block diagram of a device for scheduling packet transmission according to an embodiment of the invention.

FIG. 5 illustrates the structure of a multi-queue 404 according to an embodiment of the invention.

FIG. 6 is a flowchart illustrating the flow of a method for scheduling packet transmission according to an embodiment of the invention.

## DETAILED DESCRIPTION

As the present invention allows for various changes and numerous embodiments, particular embodiments will be illustrated in the drawings and described in detail in the written description. However, this is not intended to limit the present invention to particular modes of practice. In describing the drawings, like reference numerals are used for like elements.

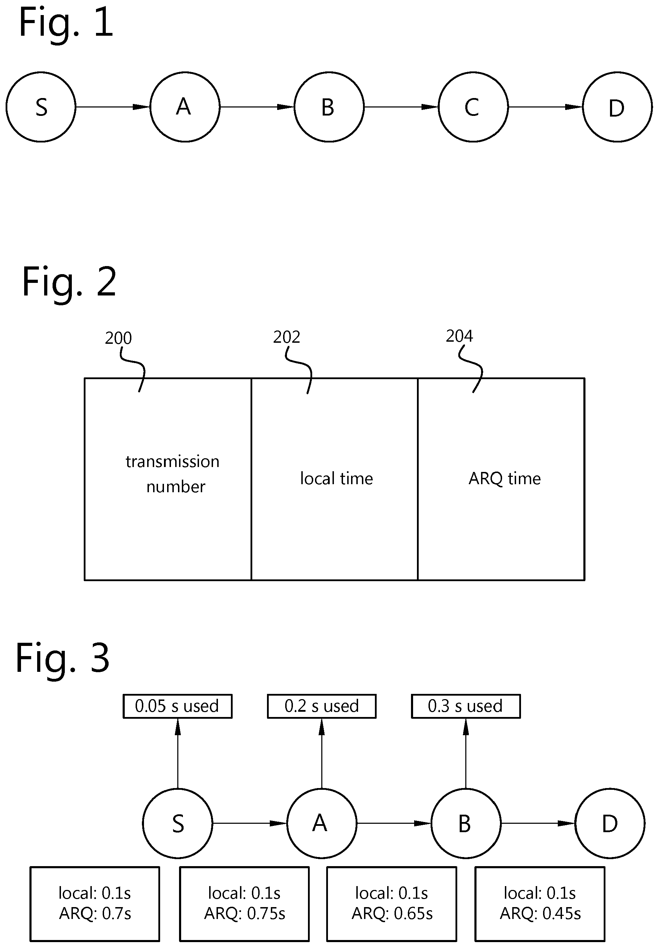

FIG. 1 illustrates an example of a communication system to which a method for scheduling packet transmission based on an embodiment of the invention may be applied.

Referring to FIG. 1, a communication system to which a packet transmission scheduling method according to an embodiment of the invention is applied can include multiple nodes and may be a multi-hop network communication system in which packets are transmitted over multiple relay nodes A, B, C from a source node S to a destination node D.

A packet may be transmitted from the source node S, and the relay nodes A, B, C may relay the packet such that the packet transmitted from the source node S reaches the destination node D.

Channel, Deadline, and Distortion (CD2) Aware Scheduling for Video Streams over Wireless", IEEE TRANSACTIONS ON WIRELESS COMMUNICATIONS, VOL. 9, NP. 3, MARCH 2010 discloses that a variable called "delay bound" may be used to determine whether or not to drop a packet. For example, a scheduling for packet transmission may entail assigning a delay bound for each hop, and dropping the packet if the delay bound is exceeded at a particular hop.

Also, if a transmission error occurs during a packet transmission, a retransmission from the source node S of the packet for which the error occurred may be requested, and the source node S may again transmit the packet of which retransmission was requested. The retransmission can take place over several rounds, and if the time lapsed for the initial transmission and the retransmission exceeds the delay bound, the packet may be dropped.

Exact Admission Control for Networks with a Bounded Delay Service", IEEE/ACM TRANSACTIONS ON NETWORKING VOL. 4 NO. 6 DECEMBER 1996 discloses that priority levels may be set for packets standing by in a queue based on the delay bounds assigned to each packet, where a packet having a smaller delay bound may be given higher priority over a packet having a larger delay bound.

A device for scheduling packet transmission according to an embodiment of the invention may be equipped for each node, to assign priority levels to the packets provided to each node for transmitting the packets.

A packet transmit scheduling based on an embodiment of the invention may schedule packet transmission by using two variables, the local time and the ARQ (Automatic Repeat Request) time.

The local time refers to the time allotted at a transmitting node for each hop in a multi-hop network, and may serve as a basis for setting priority levels for the packets. That is, when multiple packets are standing by in a queue at a transmitting node, the priority levels for packet transmission may be determined based on the local times of the respective packets.

The ARQ time may serve as a basis for determining whether or not a packet is to be dropped and may also be used in setting the priority levels of the packets when necessary. When the ARQ time of a particular packet reaches 0, the packet may be dropped.

Using $i$ to represent a flow, $n$ to represent a node, $D_i$ to represent the delay bound at flow $i$, and $N_i$ to represent the total number of nodes, the local time $d_{i,n}$ at each node can be defined by Equation 1 shown below.

[Equation 1]

$$d_{i,n} = (1-\alpha)D_i / (N_i - 1)$$

As can be seen from Equation 1 above, the local time is a variable that is proportional to the delay bound. The weight variable $\alpha$ for used in determining the local time may be determined according to the level of importance of the packet.

The ARQ time may be determined by the delay bound and the established local time. The following Equation 2 expresses the ARQ time allotted to the $q$-th packet at node $n$ for flow $i$.

[Equation 2]

$$a_{i,n}^{q} = \begin{cases} D_i - \sum_{j=1}^{N_i-1} d_{i,j}, & n = 1 \\ d_{i,n-1} + a_{i,n-1}^{q} - s_{i,n-1} - \tau_{i,n-1}^{q}, & n > 1 \end{cases}$$

In Equation 2 above, $s_{i,n}$ represents service time, and $\tau_{i,n}^{q}$ represents a sum of the queuing delay time and transmission delay time for the q-th packet.

When transmitting a packet, the local time may be expended first, and the ARQ time may be expended when all of the local time has been expended. Since the local time is expended first and the ARQ time is expended afterwards, having the ARQ time reach 0 is the same as reaching the delay bound, and hence the packet may be dropped.

If not all of the local time was expended in a first hop, in which a packet was transmitted from a first node to a second node, then the remaining local time may be added to the ARQ time in the second hop. For example, if the local time were 1 second at the first hop and 0.5 seconds were used in the first hop so that 0.5 seconds of the local time is left remaining, then the remaining local time may be added to the ARQ time.

FIG. 2 illustrates a header structure for a transmitted packet according to an embodiment of the invention.

Referring to FIG. 2, a packet for which a packet scheduling method according to an embodiment of the invention is used can include a transmission number field 200, a local time field 202, and an ARQ time field 204 as header information.

In the transmission number field 200, the information for checking whether the packet is a retransmitted packet may be recorded. For instance, flag information can be recorded for checking for retransmission, or information on the specific number of transmissions can be recorded.

For example, flag information can be recorded in the transmission number field 200, with "0" representing an initial transmission and "1" representing a retransmitted packet.

In the local time field 202, information regarding the local time initially set at the transmitting node may be recorded. The local time recorded in the local time field 202 may be used as information for setting the priority levels of packets in a queue.

In the ARQ time field 204, information on the remaining ARQ time may be recorded. As described above, when all of the ARQ time is expended, the corresponding packet may be dropped.

FIG. 3 illustrates changes in local time and ARQ time when a packet is transmitted according to an embodiment of the invention.

Referring to FIG. 3, a communication system is illustrated that is composed of a source node S, two relay nodes A, B, and a destination node D, where a packet is transmitted from the source node S to the destination node D in the order of S-A-B-D. That is, the packet is transmitted from the source node S to the destination node D over through hops.

Suppose that the total delay bound is 1 second, and that the local time assigned to the transmitting node for each hop is 0.1 second. As there are three hops, the total sum of the local times assigned to the transmitting nodes of the respective hops is 0.3 seconds, and therefore the ARQ time is 0.7 seconds.

Suppose 0.05 seconds are expended in the first hop until the transmitting node transmitted the packet. Then, in the first hop, not all of the local time is used, and 0.05 seconds of the local time remains.

The source node S of the first hop may add the remaining local time, 0.05 seconds, to the ARQ time, and the packet reflecting the modified ARQ time information may be transmitted to the first relay node A. Since 0.05 seconds of additional ARQ time was provided, the local time is 0.1 second and the ARQ time is 0.75 seconds at the first relay node A.

If 0.2 seconds are expended at the first relay node A in transmitting the packet (including the transmission delay in the first hop), then 0.1 second of the local time is expended, and 0.1 second of the ARQ time is then used. Here, the ARQ time is changed from 0.75 seconds to 0.65 seconds.

The first relay node A may incorporate the changed ARQ time in the header information and transmit the packet to the second relay node.

If 0.3 seconds are expended at the second relay node B in transmitting the packet to the destination node D (including the transmission delay in the second hop), then 0.1 second of the local time is expended, and 0.2 seconds of the ARQ time are then used. Thus, the ARQ time is changed from 0.65 seconds to 0.45 seconds.

The second relay node B may incorporate the changed ARQ time in the header information and transmit the packet to the second relay node.

As seen in FIG. 3, each transmitting node, when transmitting a packet, may first use the local time and may use the ARQ time when the local time is used up. When all of the ARQ time is expended, the corresponding packet may be dropped.

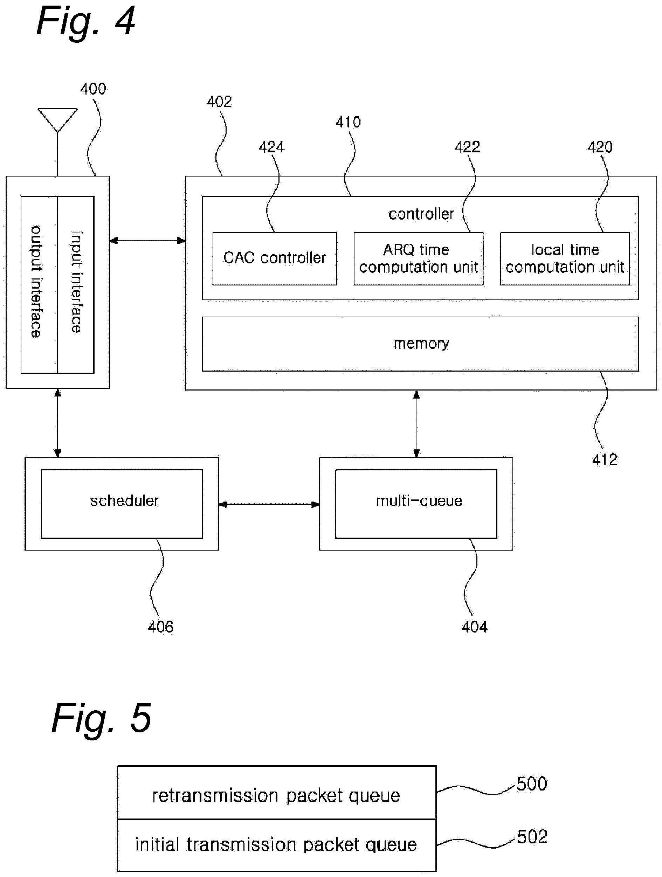

FIG. 4 is a block diagram of a device for scheduling packet transmission according to an embodiment of the invention.

The packet transmission scheduling device illustrated in FIG. 4 may be equipped at each node of a multi-hop network.

Referring to FIG. 4, a packet transmission scheduling device according to an embodiment of the invention may include an input/output interface unit 400, a processor unit 402, a multi-queue 404, and a scheduler 406.

The processor unit 402 may include a controller 410 and a memory device 412, and the controller 410 may include a local time computation unit 420, an ARQ time computation unit 422, and a CAC (Call Admission Control) controller 424.

The input/output interface unit 400 may include an input interface and an output interface. The data received from other nodes may be inputted via the input interface. The data to be transmitted from the node may be outputted via the output interface.

The controller 410 may serve to determine whether or not a packet received via the input interface is to be inputted to the multi-queue 404 and to manage the ARQ time and local time of a packet.

The local time computation unit 420 of the controller may analyze the header information of a packet received via the input interface to check the local time of the packet and may measure the amount of local time expended. The local time computation unit 420 of a source node, where the packet is generated, may compute the local time of the generated packet. The local time can be computed as in Equation 1.

The ARQ time computation unit 422 may check the ARQ time recorded in the packet received from the input interface. Also, the ARQ time computation unit 422 may measure the amount of ARQ time expended. The ARQ time computation unit 422 may lastly check the duration of time for which the packet remained at the node and may update the ARQ time when the packet is outputted via the output interface.

When a packet of a new flow is received, the CAC controller 424 may determine whether or not to process the packet of the flow. Here, a flow can be defined as a source from which a packet is generated. For example, a first flow can be a flow for streaming packets transmitted from a particular video server, while a second flow can be a flow for game data packets transmitted from a game server.

The CAC controller 424 may determine whether or not to process the new packet in consideration of the probability of violating a delay bound if the packet of the new flow were to be processed and the processing capacity of the node for guaranteeing QoS. The CAC controller 424 may accept and process a packet of a new flow if the probability of violating a delay bound is lower than or equal to a preset threshold and if the processing capacity for guaranteeing QoS is smaller than or equal to the maximum processing capacity of the node.

According to an embodiment of the invention, the probability of violating the delay bound for a flow *i* can be computed as in Equation 3 shown below.

[Equation 3]

$$P_{DBV,i} = 1 - \sum_{i=0}^{r_i} \binom{N_i + i - 2}{i} p^i (1-p)^{N_i - 1}$$

In Equation 3, $N_i$ represents the number of nodes for the flow *i,* and *p* represents the probability of an error occurring.

Also, the condition for the processing capacity required when the new flow is accepted exceeding the maximum processing capacity of the node can be expressed as Equation 4 shown below.

[Equation 4]

$$\sum_{\forall i \in V_n} 2s_i / x_{\min,i} < 1$$

In Equation 4, $S_i$ represents the service time for each flow, $V_n$ represents the set of traffic flows transmitted initially, and $x_{\min,i}$ represents the minimum interval between arriving packets for each flow.

In a multi-queue 404, the packets that are to be processed may be inputted and placed in a standby state. FIG. 5 illustrates the structure of a multi-queue 404 according to an embodiment of the invention.

Referring to FIG. 5, a multi-queue 404 according to an embodiment of the invention may include a retransmission packet queue 500 and an initial transmission packet queue 502.

The retransmission packet queue 500 may be a queue for packets that have experienced a failure in transmission and are to be retransmitted, and the initial transmission packet queue 502 may be queue for packets that are being transmitted for the first time from a source node. The retransmission packet queue 500 can also include packets for which the local time was used up during standby in the initial transmission packet queue 502.

One reason for having the packet transmission scheduling device according to an embodiment of the invention place the retransmitted packets and initially transmitted packets in different queues is that the scheduler 406 may transmit the packets with different priority levels assigned for each queue.

The packets waiting in the retransmission packet queue 500 may be assigned higher priority levels compared to the packets waiting in the initial transmission packet queue 502.

The scheduler 406 may determine the transmission order of the packets according to the priority levels of the packets placed in standby in the queues, and may provide the input/output interface unit with the packets that are to be transmitted.

As described above, the scheduler 406 may assign higher priority to packets that are being retransmitted (i.e. packets waiting in the retransmission packet queue 500) compared to packets that are transmitted for the first time (i.e. packets waiting in the initial transmission packet queue 502).

The packets standing by in the retransmission packet queue 500 may be packets for which the local times have been used up, and as such, the priority levels for the packets standing by in the retransmission packet queue 500 may be set based on the remaining ARQ times.

The priority levels for the packets standing by in the initial transmission packet queue 502 may be set based on the local times.

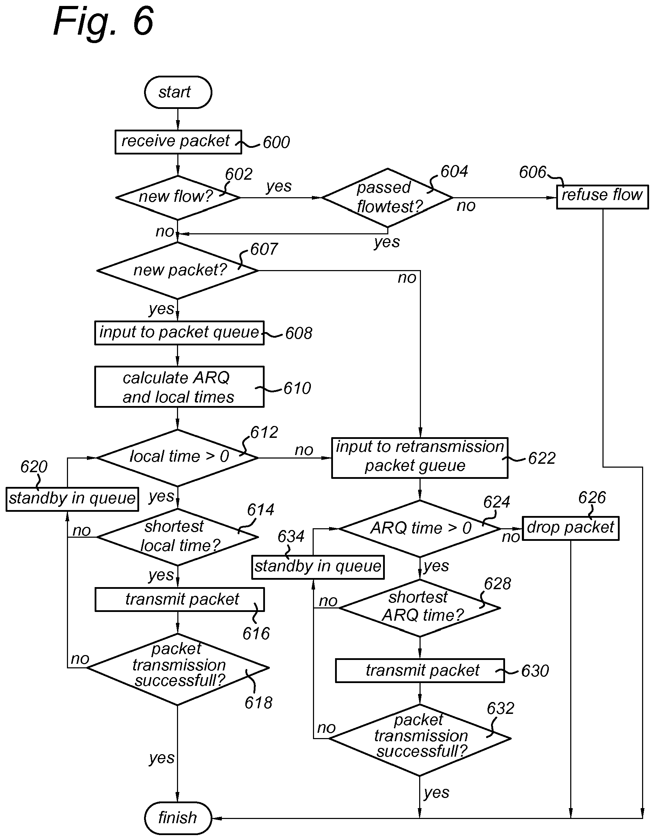

FIG. 6 is a flowchart illustrating the flow of a method for scheduling packet transmission according to an embodiment of the invention.

Referring to FIG. 6, a packet may first be received at a device for scheduling packet transmission (operation 600).

When a packet is received, it may be determined whether or not it is a packet from a new flow (operation 602). If it is a packet from a new flow, the CAC controller 424 may determine whether or not the packet from the new flow is to be accepted (operation 604). As described above, the determining of whether or not the packet from a new flow is to be accepted may consider the probability of delay bound violation and the node's processing capacity.

If the probability of delay bound violation exceeds a preset threshold or if the processing capacity exceeds the maximum processing capacity of the node, the packet from the flow may be refused (operation 606).

If the packet is not from a new flow, it may be determined whether the packet is a retransmitted packet or an initially transmitted packet (operation 607).

If it is an initially transmitted packet, the packet may be inputted to the initial transmission packet queue (operation 608), and if it is a retransmitted packet, the packet may be inputted to the retransmission packet queue (operation 622).

Once the packet is inputted to a queue, the local time and the ARQ time of the packet may be computed continuously (operation 610).

If all of the local time is used up while in the initial transmission packet queue (operation 612), then the packet for which the local time has been used up may be inputted to the retransmission packet queue (operation 622).

In the case of an initially transmitted packet, it may be determined whether or not the packet has the shortest local time from among the packets standing by in the initial transmission packet queue (operation 614).

If it has the shortest local time, then the packet may be transmitted (operation 616). Then, after the packet transmission, it may be determined whether or not the transmission was successful (operation 618).

If the packet does not have the shortest local time or if a failure occurs during transmission, then the packet may maintain its standby state in the queue (operation 620).

As described above, if a received packet is not an initially transmitted packet, or even though it is an initially transmitted packet, if all of the local time has been used up while in the initial transmission packet queue, then the packet may be inputted to the retransmission packet queue (operation 622).

For a packet waiting in the retransmission packet queue, it may be determined whether or not the ARQ time is greater than 0 (operation 624). If the ARQ time of the packet is 0 or less, then the packet may be dropped (operation 626).

In the retransmission packet queue, the priority levels may be set by using the ARQ times, and hence it may be determined whether or not a packet has the shortest ARQ time from among the packets standing by in the retransmission packet queue (operation 628). If it has the shortest ARQ time, then the packet may be transmitted (operation 630).

It may then be determined whether or not the packet was transmitted successfully (operation 632), and if the transmission of the packet was not successful or if the packet does not have the shortest ARQ time, the packet may maintain its standby state in the retransmission packet queue (operation 634).

While the present invention has been described above using particular examples, including specific elements, by way of limited embodiments and drawings, it is to be appreciated that these are provided merely to aid the overall understanding of the present invention, the present invention is not to be limited to the embodiments above, and various modifications and alterations can be made from the disclosures above by a person having ordinary skill in the technical field to which the present invention pertains.

**Claims**

1. A device for scheduling packet transmission, the device comprising:

    an interface unit (400) configured to transmit and receive a packet;
    a controller (410) configured to calculate a local time and an ARQ time from a packet to be transmitted, the local time determined in proportion to a packet delay bound, the ARQ time determined based on the local time and the packet delay bound,
    a queue (404) having inputted therein the packet to be transmitted; and
    a scheduler (406) configured to determine a transmission order of packets inputted in the queue based on at least one of the local time and the ARQ time, the device being further **characterised in that** the local time at node n is determined by following equation,

$$d_{i,n} = (1-\alpha)D_i /(N_i - 1)$$

    and that the ARQ time allotted to q-th packet at node n is determined by following equation,

$$a_{i,n}^q = \begin{cases} D_i - \sum_{j=1}^{N_i-1} d_{i,j}, & n = 1 \\ d_{i,n-1} + a_{i,n-1}^q - s_{i,n-1} - \tau_{i,n-1}^q, & n > 1 \end{cases}$$

    wherein i represents a flow, $D_i$ represents the delay bound, $\alpha$ represents a weight variable determined according to level of importance of a packet, $s_{i,n}$ represents service time, $\tau^q_{i,n}$ represents a sum of the queuing delay time and transmission delay time for the $q$-th packet, and $N_i$ represents the total number of nodes of flow i.

2. The device for scheduling packet transmission of claim 1, wherein the queue (404) comprises a retransmission packet queue (500) and an initial transmission packet queue (502), the retransmission packet queue (500) having inputted therein a packet that is to be retransmitted, the initial packet queue (502) having inputted therein a packet that is to be transmitted initially.

3. The device for scheduling packet transmission of claim 2, wherein the controller (410) uses the local time first and then uses the ARQ time when calculating the local time and the ARQ time.

4. The device for scheduling packet transmission of claim 3, wherein the local time is set for each node in a multi-hop network, and the ARQ time is set to a fixed value regardless of node.

5. The device for scheduling packet transmission of claim 4, wherein, if not all of the local time is used for a packet at a particular node transmitting the packet in the multi-hop network, the remaining local time is added to the ARQ time to modify the ARQ time.

6. The device for scheduling packet transmission of claim 2, wherein the controller (410) determines whether or not the packet to be transmitted is a retransmitted packet and inputs the packet to the retransmission packet queue (500) if the packet is a retransmitted packet and inputs the packet to the initial transmission packet queue (502) if the packet is not a retransmitted packet.

7. The device for scheduling packet transmission of claim 6, wherein the scheduler (406) assigns a higher priority level to packets standing by in the retransmission packet queue (500) than to packets standing by in the initial transmission packet queue (502).

8. A method for scheduling packet transmission, the method comprising:

(a) inputting a packet to be transferred in a queue (404);
(b) calculating a local time and an ARQ time from the packet to be transmitted, the local time determined in proportion to a packet delay bound, the ARQ time determined based on the local time and the packet delay bound; and
(c) determining a priority level of the packet to be transmitted based on at least one of the local time and the ARQ time,

the method being further **characterised in that** the local time at node n is determined by following equation,

$$d_{i,n} = (1-\alpha)D_i /(N_i - 1)$$

and that the ARQ time allotted to q-th packet at node n is determined by following equation,

$$a^q_{i,n} = \begin{cases} D_i - \sum_{j=1}^{N_i-1} d_{i,j}, & n = 1 \\ d_{i,n-1} + a^q_{i,n-1} - s_{i,n-1} - \tau^q_{i,n-1}, & n > 1 \end{cases}$$

wherein i represents a flow, $D_i$ represents the delay bound, $\alpha$ represents a weight variable determined according to level of importance of a packet, $s_{i,n}$ represents service time, $\tau^q_{i,n}$ represents a sum of the queuing delay time and transmission delay time for the $q$-th packet, and $N_i$ represents the total number of nodes of flow i.

9. The method of claim 8, wherein the queue 404 comprises a retransmission packet queue (500) and an initial transmission packet queue (502), the retransmission packet queue (500) having inputted therein a packet that is to be retransmitted, the initial packet queue (502) having inputted therein a packet that is to be transmitted initially.

**10.** The method of claim 8, wherein the local time is used first and the ARQ time is used afterwards, once the local time and the ARQ time are calculated.

**11.** The method of claim 8, wherein the local time is set for each node in a multi-hop network, and the ARQ time is set to a fixed value regardless of node.

**12.** The method of claim 10, wherein, if not all of the local time is used for a packet at a particular node transmitting the packet in the multi-hop network, the remaining local time is added to the ARQ time to modify the ARQ time.

**13.** The method of claim 9, wherein the inputting comprises determining whether or not the packet to be transmitted is a retransmitted packet and inputting the packet to the retransmission packet queue (500) if the packet is a retransmitted packet and inputting the packet to the initial transmission packet queue (502) if the packet is not a retransmitted packet.

**14.** The method of claim 13, wherein the determining of the priority level comprises assigning a higher priority level to packets standing by in the retransmission packet queue (500) than to packets standing by in the initial transmission packet queue (502).

**15.** The method of claim 13, wherein the determining of the priority level comprises determining priority levels for packets standing by in the initial transmission packet queue (502) by using the local times.

**Patentansprüche**

**1.** Vorrichtung zur Planung von Paketübertragung, wobei die Vorrichtung umfasst:

eine Schnittstelleneinheit (400), die konfiguriert ist, um ein Paket zu übertragen und zu empfangen;
eine Steuereinheit (410), die konfiguriert ist, um eine lokale Zeit und eine ARQ-Zeit von einem zu übertragenden Paket zu berechnen, wobei die lokale Zeit im Verhältnis zu einer Paketverzögerungsbegrenzung bestimmt wird, wobei die ARQ-Zeit basierend auf der lokalen Zeit und der Paketverzögerungsbegrenzung bestimmt wird,
eine Warteschlange (404), in die das zu übertragende Paket eingefügt wird; und
einen Planer (406), der konfiguriert ist, um eine Übertragungsreihenfolge von Paketen, welche in die Warteschlange eingefügt sind, , basierend auf mindestens einem aus der Gruppe bestehend aus der lokalen Zeit und der ARQ-Zeit zu bestimmen,

wobei die Vorrichtung ferner **dadurch gekennzeichnet ist, dass** die lokale Zeit an dem Knoten n durch die folgende Gleichung bestimmt wird

$$d_{i,n} = (1-\alpha)D_i / (N_i - 1) \text{,}$$

und dass die ARQ-Zeit, die dem q-ten Paket an dem Knoten n zugewiesen wird, durch die folgende Gleichung bestimmt wird

$$a_{i,n}^q = \begin{cases} D_i - \sum_{j=1}^{N_i-1} d_{i,j}, & n = 1 \\ d_{i,n-1} + a_{i,n-1}^q - s_{i,n-1} - \tau_{i,n-1}^q, & n > 1 \end{cases} \text{,}$$

wobei $i$ einen Fluss darstellt, $D_i$ die Verzögerungsbegrenzung darstellt, $\alpha$ eine Gewichtungsvariable darstellt, die gemäß dem Grad der Wichtigkeit eines Pakets bestimmt wird, $s_{i,n}$ die Servicezeit darstellt, $\tau_{i,n}^q$ eine Summe aus der Warteverzögerungszeit und der Übertragungsverzögerungszeit für das $q\text{-}te$ Paket darstellt, und $N_i$ die Gesamtzahl der Knoten des Flusses $i$ darstellt.

**2.** Vorrichtung zur Planung von Paketübertragung nach Anspruch 1, wobei die Warteschlange (404) eine Neuübertragungs-Paketwarteschlange (500) und eine anfängliche Übertragungs-Paketwarteschlange (502) umfasst, wobei in die Neuübertragungs-Paketwarteschlange (500) ein Paket eingefügt wird, welches neu zu übertragen ist, wobei in die anfängliche Paketwarteschlange (502) ein Paket eingefügt wird, das anfänglich übertragen werden soll.

**3.** Vorrichtung zur Planung von Paketübertragung nach Anspruch 2, wobei die Steuereinheit (410) bei der Berechnung der lokalen Zeit und der ARQ-Zeit zuerst die lokale Zeit verwendet und dann die ARQ-Zeit verwendet.

**4.** Vorrichtung zur Planung von Paketübertragung nach Anspruch 3, wobei die lokale Zeit für jeden Knoten in einem Multi-Hop-Netzwerk festgelegt ist und die ARQ-Zeit unabhängig vom Knoten auf einen festen Wert festgelegt wird.

**5.** Vorrichtung zur Planung von Paketübertragung nach Anspruch 4, wobei, wenn nicht die gesamte lokale Zeit für ein Paket an einem bestimmten Knoten verwendet wird, der das Paket in dem Multi-Hop-Netzwerk überträgt, die verbleibende lokale Zeit der ARQ-Zeit hinzugefügt wird, um die ARQ-Zeit zu modifizieren.

**6.** Vorrichtung zur Planung von Paketübertragung nach Anspruch 2, wobei die Steuereinheit (410) bestimmt, ob das zu übertragende Paket ein neu zu übertragenes Paket ist oder nicht, und das Paket in die Neuübertragungs-Paketwarteschlange (500) einfügt, falls das Paket ein neu zu übertragenes Paket ist und das Paket in die anfängliche Übertragungs-Paketwarteschlange (502) einfügt, wenn das Paket kein neu zu übertragenes Paket ist.

**7.** Vorrichtung zur Planung von Paketübertragung nach Anspruch 6, wobei der Planer (406) Paketen, die in der Neuübertragungs-Paketwarteschlange (500) warten, eine höhere Prioritätsstufe zuweist als den Paketen, die in der anfänglichen Übertragungs-Paketwarteschlange (502) warten.

**8.** Verfahren zur Planung von Paketübertragung, wobei das Verfahren umfasst:

(a) Einfügen eines zu übermittelnden Pakets in eine Warteschlange (404);
(b) Berechnen einer lokalen Zeit und einer ARQ-Zeit von dem zu übertragenden Paket, wobei die lokale Zeit im Verhältnis zu einer Paketverzögerungsbegrenzung bestimmt wird, wobei die ARQ-Zeit basierend auf der lokalen Zeit und der Paketverzögerungsbegrenzung bestimmt wird; und
(c) Bestimmen einer Prioritätsstufe des zu übertragenden Pakets basierend auf mindestens einem aus der Gruppe bestehend aus der lokalen Zeit und der ARQ-Zeit,

wobei das Verfahren ferner **dadurch gekennzeichnet ist, dass** die lokale Zeit an dem Knoten n durch die folgende Gleichung bestimmt wird

$$d_{i,n} = (1-\alpha)D_i / (N_i - 1)$$

und dass die ARQ-Zeit, die dem q-ten Paket an dem Knoten n zugewiesen wird, durch die folgende Gleichung bestimmt wird

$$a_{i,n}^q = \begin{cases} D_i - \sum_{j=1}^{N_i-1} d_{i,j}, & n = 1 \\ d_{i,n-1} + a_{i,n-1}^q - s_{i,n-1} - \tau_{i,n-1}^q, & n > 1 \end{cases},$$

wobei $i$ einen Fluss darstellt, $D_i$ die Verzögerungsbegrenzung darstellt, $\alpha$ eine Gewichtungsvariable darstellt, die gemäß dem Grad der Wichtigkeit eines Pakets bestimmt wird, $s_{i,n}$ die Servicezeit darstellt, $\tau_{i,n}^q$ eine Summe aus der Warteverzögerungszeit und der Übertragungsverzögerungszeit für das $q$-te Paket darstellt, und $N_i$ die Gesamtzahl der Knoten des Flusses $i$ darstellt.

**9.** Verfahren nach Anspruch 8, wobei die Warteschlange (404) eine Neuübertragungs-Paketwarteschlange (500) und eine anfängliche Übertragungs-Paketwarteschlange (502) umfasst, wobei in die Neuübertragungs-Paketwarteschlange (500) ein Paket eingefügt wird, welches neu zu übertragen ist, wobei in die anfängliche Paketwarteschlange (502) ein Paket eingefügt wird, das anfänglich übertragen werden soll.

10. Verfahren nach Anspruch 8, wobei die lokale Zeit zuerst verwendet wird und die ARQ-Zeit danach verwendet wird, sobald die lokale Zeit und die ARQ-Zeit berechnet worden sind.

11. Verfahren nach Anspruch 8, wobei die lokale Zeit für jeden Knoten in einem Multi-Hop-Netzwerk festgelegt ist und die ARQ-Zeit unabhängig von dem Knoten auf einen festen Wert festgelegt wird.

12. Verfahren nach Anspruch 10, wobei, wenn nicht die gesamte lokale Zeit für ein Paket an einem bestimmten Knoten verwendet wird, der das Paket in dem Multi-Hop-Netzwerk überträgt, die verbleibende lokale Zeit der ARQ-Zeit hinzugefügt wird, um die ARQ-Zeit zu modifizieren.

13. Verfahren nach Anspruch 9, wobei das Einfügen das Bestimmen umfasst, ob das zu übertragende Paket ein neu zu übertragenes Paket ist oder nicht, und das Paket in die Neuübertragungs-Paketwarteschlange (500) eingefügt wird, falls das Paket ein neu zu übertragenes Paket ist, und das Paket in die anfängliche Übertragungs-Paketwarteschlange (502) eingefügt wird, wenn das Paket kein neu zu übertragenes Paket ist.

14. Verfahren nach Anspruch 13, wobei das Bestimmen der Prioritätsstufe das Zuordnen einer höheren Prioritätsstufe zu den in der Neuübertragungs-Paketwarteschlange (500) wartenden Paketen als den in der anfänglichen Übertragungs-Paketwarteschlange (502) wartenden Paketen umfasst.

15. Verfahren nach Anspruch 13, wobei das Bestimmen der Prioritätsstufe das Bestimmen von Prioritätsstufen für Pakete umfasst, die in der anfänglichen Übertragungs-Paketwarteschlange (502) warten, indem die lokalen Zeiten verwendet werden.

**Revendications**

1. Dispositif de programmation de transmission de paquets, le dispositif comprenant :

une unité d'interface (400) configurée pour transmettre et recevoir un paquet,
un contrôleur (410) configuré pour calculer un temps local et un temps ARQ d'un paquet à transmettre, le temps local étant déterminé en proportion à une borne de retard de paquet et le temps ARQ étant déterminé sur la base du temps local et de la borne de retard de paquet,
une liste d'attente (404) dans laquelle est introduit le paquet à transmettre et
un programme de commande (406) configuré pour déterminer un ordre de transmission des paquets introduits dans la liste d'attente sur la base du temps local et/ou du temps ARQ,

le dispositif étant en outre **caractérisé en ce que**
le temps local au noeud n est déterminé par l'équation suivante :

$$d_{i,n} = (1-\alpha)D_i/(N_i-1)$$

et **en ce que** le temps ARQ attribué au paquet q au noeud n est déterminé par l'équation suivante :

$$a_{i,n}^{q} = \begin{cases} D_i - \sum_{j=1}^{N_i-1} d_{i,j}, & n=1 \\ d_{i,n-1} + a_{i,n-1}^{q} - s_{i,n-1} - \tau_{i,n-1}^{q}, & n>1 \end{cases}$$

dans laquelle i représente un flux, $D_i$ représente la borne de retard, $\alpha$, représente une variante de pondération déterminée selon le niveau d'importance d'un paquet, $s_{i,n}$ représente un temps de service, $\tau_{i,n}^{q}$ représente une

somme du temps de retard d'attente et du temps de retard de transmission pour le paquet q et N$_i$ représente le nombre total de noeuds du flux i.

2. Dispositif de programmation de la transmission de paquets selon la revendication 1, dans lequel la liste d'attente (404) comprend une liste d'attente (500) de paquets de retransmission et une liste d'attente (502) de paquets de transmission initiale, la liste d'attente (500) de paquets de retransmission recevant un paquet à retransmettre, la liste d'attente (502) de paquets de transmission initiale recevant un paquet à transmettre initialement.

3. Dispositif de programmation de la transmission de paquets selon la revendication 2, dans lequel le contrôleur (410) utilise d'abord le temps local et utilise ensuite le temps ARQ lorsqu'il calcule le temps local et le temps ARQ.

4. Dispositif de programmation de la transmission de paquets selon la revendication 3, dans lequel le temps local est fixé pour chaque noeud dans un réseau multi-hop et le temps ARQ est fixé à une valeur fixe quel que soit le noeud.

5. Dispositif de programmation de la transmission de paquets selon la revendication 4, dans lequel si la totalité du temps local n'est pas utilisée pour un paquet en un noeud particulier qui transmet le paquet dans le réseau multi-hop, le temps local restant est ajouté au temps ARQ pour modifier le temps ARQ.

6. Dispositif de programmation de la transmission de paquets selon la revendication 2, dans lequel le contrôleur (410) détermine si le paquet à transmettre est ou non un paquet retransmis, introduit le paquet dans la liste d'attente (500) de paquets de retransmission si le paquet est un paquet retransmis et introduit le paquet dans la liste d'attente (502) de paquets de transmission initiale si le paquet n'est pas un paquet retransmis.

7. Dispositif de programmation de la transmission de paquets selon la revendication 6, dans lequel le programme de commande (406) attribue un niveau de priorité plus élevé au paquet en attente dans la liste d'attente (500) de paquets de retransmission qu'à des paquets en attente dans la liste d'attente (502) de paquets de transmission initiale.

8. Procédé de programmation de transmission de paquets, le procédé comprenant les étapes qui consistent à :

   (a) introduire dans une liste d'attente (404) un paquet à transmettre,
   (b) calculer un temps local et en temps ARQ du paquet à transmettre, le temps local étant déterminé en proportion à une borne de retard de paquet et le temps ARQ étant déterminé sur la base du temps local et de la borne de retard de paquet, et
   (c) déterminer un niveau de priorité du paquet à transmettre sur la base du temps local et/ou du temps ARQ,

le procédé étant en outre **caractérisé en ce que**
le temps local au noeud n est déterminé par l'équation suivante :

$$d_{i,n} = (1-\alpha) D_i / (N_i - 1)$$

et **en ce que** le temps ARQ attribué au paquet q au noeud n est déterminé par l'équation suivante :

$$a_{i,n}^q = \begin{cases} D_i - \sum_{j=1}^{N_i-1} d_{i,j}, & n=1 \\ d_{i,n-1} + a_{i,n-1}^q - s_{i,n-1} - \tau_{i,n-1}^q, & n>1 \end{cases}$$

dans laquelle i représente un flux, $D_i$ représente la borne de retard, $\alpha$ représente une variante de pondération déterminée selon le niveau d'importance d'un paquet, $s_{i,n}$ représente un temps de service, $\tau_{i,n}^q$ représente une somme du temps de retard d'attente et du temps de retard de transmission pour le paquet q et $N_i$ représente le nombre total de noeuds du flux i.

9. Procédé selon la revendication 8, dans lequel la liste d'attente (404) comprend une liste d'attente (500) de paquets de retransmission et une liste d'attente (502) de paquets de transmission initial, la liste d'attente (500) de paquets de retransmission recevant un paquet à retransmettre, la liste d'attente (502) de paquets de transmission initial recevant un paquet à transmettre initialement.

10. Procédé selon la revendication 8, dans lequel le temps local est d'abord utilisé et le temps ARQ est utilisé ensuite, lorsque le temps local et le temps ARQ sont calculés.

11. Procédé selon la revendication 8, dans lequel le temps local est fixé pour chaque noeud d'un réseau multi-hop et le temps ARQ est fixé à une valeur fixe quel que soit le noeud.

12. Procédé selon la revendication 10, dans lequel si la totalité du temps local n'est pas utilisée pour un paquet en un noeud particulier qui transmet le paquet dans le réseau multi-hop, le temps local restant est ajouté au temps ARQ pour modifier le temps ARQ.

13. Procédé selon la revendication 9, dans lequel l'introduction comprend les étapes qui consistent à déterminer si le paquet à transmettre est un paquet retransmis, à introduire le paquet dans la liste d'attente (500) de paquets de retransmission si le paquet est un paquet retransmis et à introduire le paquet dans la liste d'attente (502) de paquets de transmission initiale si le paquet n'est pas un paquet retransmis.

14. Procédé selon la revendication 13, dans lequel la détermination du niveau de priorité comprend l'étape qui consiste à attribuer à des paquets en attente dans la liste d'attente (500) de paquets de retransmission un niveau de priorité plus élevé qu'à des paquets en attente dans la liste d'attente (502) de paquets de transmission initiale.

15. Procédé selon la revendication 13, dans lequel la détermination du niveau de priorité comprend l'étape qui consiste à déterminer les niveaux de priorité de paquets en attente dans la liste d'attente (502) de paquets de transmission initiale en utilisant les temps locaux.

# Fig. 1

S → A → B → C → D

# Fig. 2

| 200 | 202 | 204 |
|---|---|---|
| transmission number | local time | ARQ time |

# Fig. 3

| 0.05 s used | 0.2 s used | 0.3 s used |
|---|---|---|

S → A → B → D

| local: 0.1s ARQ: 0.7s | local: 0.1s ARQ: 0.75s | local: 0.1s ARQ: 0.65s | local: 0.1s ARQ: 0.45s |
|---|---|---|---|

# Fig. 4

400

402

424 410 422 420

controller

output interface | input interface

CAC controller | ARQ time computation unit | local time computation unit

memory

412

scheduler | multi-queue

406 | 404

# Fig. 5

retransmission packet queue — 500

initial transmission packet queue — 502

# Fig. 6

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- Adaptive per hop differentiation for end to end delay assuarance in multihop wireless networks. AD HOC NETWORKS. ELSEVIER, 01 August 2009, vol. 7
- **LIANG BEN ; DONG MIN.** Packet Prioritization in Multihop Latency Aware Scheduling for Delay Constrained Communication. *IEEE Journal on selected areas in communications,* 2007
- Channel, Deadline, and Distortion (CD2) Aware Scheduling for Video Streams over Wireless. *IEEE TRANSACTIONS ON WIRELESS COMMUNICA-TIONS,* March 2010, vol. 9
- Exact Admission Control for Networks with a Bounded Delay Service. *IEEE/ACM TRANSACTIONS ON NETWORKING,* December 1996, vol. 4